# EUROPEAN PATENT APPLICATION

(11) **EP 0 993 978 A2**
(43) Date of publication of application: **19.04.2000**
(21) Application number: 99119875.5
(22) Date of filing: 07.10.1999
(51) Int. Cl.: B60J 5/00, B60J 5/04

(54) **Opening and closing system for side panels and doors**

(30) Priority: 16.10.1998 IT PD980245
(71) Applicant: Aghito Sistemi S.r.l., 35027 Noventa Padovana (Padova) (IT)
(72) Inventor: Rosa, Luigi, 35027 Noventa Padovana (IT); Tognin, Sergio, 35027 Noventa Padovana (IT)
(74) Representative: Gustorf, Gerhard, Dipl.-Ing.

(57) **Abstract**

This is a new closing system for doors of the loading compartments of large-volume vehicles composed of two iron sections, of which one specifically for the door (2) and one specifically for the upright (1), joined by 8-shaped pivots which connect the upright pin to the door pin; the upright iron section has a G-shaped or U-shaped groove (1.3) on the side facing laterally towards the outside of the loading compartment; the door iron section has a J-shaped ridge (2.3) on the short side opposite the one that receives the panels and facing towards the iron section of the upright of the loading compartment. When the door is closed the forces exerted on the door and acting in the direction opposite the movement of the vehicle are absorbed by the continuous ridge on the edge of the door inserted in the G-shaped groove (1.3) in the upright, reciprocally mated. An auxiliary lever (7) is hinged onto the bottom edge of the door and one of its ends is engaged in a coupling or groove in the bottom edge of the loading bed, so as to facilitate the movement of the door and the mating of the J-shaped ridge on the door iron section with the G-shaped groove in the upright iron section. The door iron section has an L-shaped groove on the exposed face of the door when closed and near the edge with the J-shaped ridge; an iron section with a cross-section composed of a U-shaped part and an arched part receives the ribbed edge of the tarpaulin (6) cover in the ached part and is inserted in the L-shaped groove of the door iron section.

## Description

This patent concerns an opening and closing system for doors and side panels, in particular this patent concerns an opening and closing system for doors and side panels of the loading compartment of goods transport vehicles.

At present the doors and side panels of the loading compartment of transport vehicles, containers and mobile bodies are normally fitted on hinges, typically located on the outside of the loading compartment, which allow flap opening to about 270 degrees, that is from a closed position of 0 degrees to an open position of max. 270 degrees which coincides with the position against the side walls of the loading compartment.

During the journey the load is subject to various kinds of forces, for example, acceleration, deceleration and/or centrifugal force.

Consequently the load is subject to movements inside the loading compartment which exert pressure or forces on the structure of the loading compartment and therefore also on its doors and side panels.

In particular the forces exerted on these doors and side panels are transmitted directly to the hinges and then transferred to the uprights or columns to which the doors and side panels are anchored.

These forces and pressures transmitted to the hinges are very harmful especially for the hinges, for their pivots and for the uprights to which they are anchored. Often these forces and pressures break and deform the hinges and the pivots, causing malfunction of the hinges and closing systems.

It should also be considered that, typically, the known hinges have little or no resistance to the infiltration of water and they are generally affected by atmospheric agents as they are fitted on the outside of the loading compartments.

The known opening and closing systems, in which the doors are fitted on hinges pivoting respectively on the end of the door and on the doorway upright, are such that, with time, they can also cause severe misalignment between the centres of rotation of the various hinges on the same door.

These instances of misalignment, which prevent correct operation of the doors, are caused by the spot connection which the hinges create between the door and the upright and on which all the dynamic and static stress is inevitably discharged during travelling and loading of the vehicle.

The applicant believes that if a rotating pin is provided, pivoting on the end of the door adjacent to the column or upright to which said pin is anchored, a sturdier closing system may be obtained that is more resistant to all types of stress in comparison with the known opening and closing systems.

Another problem affecting the bodies of vehicle loading compartments is the fixing and tightening of the tarpaulin cover.

Typically the side tarpaulin is fixed to pulleys on the top and, by means of cables or hooks, to eyelets on the bottom and on the two vertical sides; if the tarpaulin is to be pulled taut horizontally, normally a special "tensioning device" is used on one of the two vertical sides, this device being composed of a suitable shaft onto which the tarpaulin is wound until the desired amount of tautness is achieved, then blocked.

The fastening system with eyelets on three sides, besides taking considerable time to fasten or release, can allow the infiltration of water, dust and draughts inside the loading compartment.

Water and dust can damage the load and the structure of the body of the loading compartment, while any air infiltrations cause turbulence and resistance to the forward movement of the vehicle.

The other system for fastening the tarpaulin with the "tensioning device" mentioned above involves increased costs in fitting up the vehicle, as well as increasing the bulk and weight of the vehicle.

The opening and closing system to which this invention refers, as well as being more resistant to stress of any kind, is also less expensive, lighter and easier to produce.

One aspect of this patent concerns a new opening and closing system for doors and side panels which allows the direct and continuous transfer of any forces and pressure from the ends of the doors and side panels directly to the adjacent columns or uprights of the doorway to which the doors and side panels are anchored, along the whole length of the uprights of said doors and side panels.

Together with the opening and closing system for doors and side panels there is a new system for fastening the tarpaulins that cover the loading compartment.

This new closing system is composed of two profiled parts with a complementary geometrical shape, to be used for the upright or column and for the corresponding contact end of the door and/or side panel.

The iron section that forms the upright of the loading opening frame has a generically rectangular cross-section, with a seat corresponding to the side of the door to house and allow movement of the cylindrical rod pins, while there is a G-shaped groove on the side facing towards the outside of the loading compartment.

In particular this G-shaped groove is next to the striking edge of the door iron section and it may also be U-shaped with a rounded outline.

The end iron section which forms the edge of the door has a generically rectangular cross-section with a groove on one of the short sides to contain the panels of which the door is made, with a seat corresponding to the opposite side to house and allow movement of the cylindrical rod pins, while there is a J-shaped ridge on the short side opposite the one which receives the panels or slats, facing the iron section of the loading opening frame.

Besides this the cross-section of the end iron section of the door edge has an L-shaped grove corresponding to the exposed face of the closed door, next to the edge with the J-shaped ridge.

The two iron sections, of the rear loading opening frame and of the end edge of the door, are not connected to one another directly but by means of an element with an 8-shaped cross-section, called a hinge.

Substantially the upright is milled on the side in which the hinges are housed with the rod pins inserted; the hinges are housed in these milled spaces so as to connect the door pins to the rod pin of the upright or column.

When the doors are closed, the G-shaped groove in the upright is in a position at right angles to the complementary end of the door.

In particular the J-shaped ridge of the door end sits in the G-shaped grove in the upright and the hinge sits with its two ends respectively inside the cross-section of the column and of the door end.

The stresses exerted by the load on the door of the loading compartment are thus absorbed by the continuous ridge on the edge of the door and by the G-shaped groove in the upright, which are reciprocally mated.

The resistance to force is therefore distributed on the whole height of the end edge of the door, that is, on the whole length of the J-shaped ridge and of the G-shaped groove.

To open the door, a double operation must be performed.

The first phase of the operation requires that each leaf of the door be moved slightly sideways towards the outside of the loading compartment so as to free the J-shaped ridges of the door iron section from the G-shaped grooves in the upright iron section; this is possible thanks to the pivots which join the upright to the end of the door.

After this first operation, the complete opening of the door is achieved by freely turning the door leaf and the pivot, giving priority to the latter, around the rod pin housed in the upright iron section and then turning only the door leaf around the pins housed in the door iron section, until the door reaches its maximum opening position of about 270 degrees.

To close the door it is sufficient to perform the operations described above in inverse order.

An auxiliary lever is applied to the bottom edge of each door leaf in order to facilitate the turning and closing movement of the leaf so as to mate the J-shaped ridges of the door end with the G-shaped groove in the upright.

This lever is hinged onto the bottom edge of the leaf; on the bottom edge of the loading opening there is a coupling or a groove so as to engage one of the two ends of the auxiliary lever.

When the door leaf is moved, one of the two ends of the auxiliary lever is engaged in said coupling or groove and it is turned further, levering on the coupling or groove. Consequently the door leaf is easily moved towards the centre of the loading opening, so that the J-shaped ridge on the end of the door mates with the G-shaped groove in the upright.

The solution for mating the door end with the upright as described is necessary because it is useful for the pivots and the door to turn correctly so as to ensure that they connect with each other. The same result is obtained by applying a catch, integral with the door, which acts on the central cross-section of the pivot during the intermediate closing phase, as shown for example in table 10. In this way it is no longer necessary to move the door during the final closing phase.

The new system for fastening the tarpaulins that cover the loading compartment includes an iron section to be applied to the vertical edge of the tarpaulin.

This iron section for the edge of the tarpaulin has a compound cross-section made up of a U-shaped part and an arched part.

The width of the U-shaped part is comparable to the first cross-section of the L-shaped groove in the door iron section, one wing has a length comparable to the second cross-section of the L-shaped groove in the door iron section and the other wing is longer.

The arched part is located on the middle portion of the U-shaped part and one end is joined to the U-shaped part at the vertex where this middle portion joins the smaller wing of the U-shaped part. The other end of the arched part is near the other vertex where the middle portion joins the larger wing of the U-shaped part.

The arched part substantially forms a kind of open circle situated on the middle cross-section of the U-shaped part.

The edge of the tarpaulin to be joined to the new iron section thus formed is wound around a cable along the length of the edge so as to create a ribbed edge that is thicker than the tarpaulin. This or any other system for making the ribbing on the edge of the tarpaulin is not included in the patent. This ribbed edge is inserted in the arched part of the new iron section with the tarpaulin passing between the U-shaped part and the free end of the arched part.

The iron section with the edge of the tarpaulin inserted is mated with the new iron section on the end of the door so that the smaller end of the tarpaulin iron section is inserted in the second part of the L-shaped groove and the larger wing adheres to the outer edge of the same door iron section.

When the door is closed the tarpaulin is thus tightened by the door and it covers the coupling over the whole length of the edge of contact between the door and the upright as well as the structure of the loading compartment.

When the door is opened the iron section of the edge of the tarpaulin follows the door and the tarpaulin is slackened. At this point it is possible to remove the iron section of the edge of the tarpaulin from the iron section at the end of the door, releasing the wall from the tarpaulin to gain access to the loading compartment also from the side or to remove the tarpaulin completely.

When the door is closed, with the iron section on the edge of the tarpaulin inserted in the groove in the iron section on the end of the door, the tarpaulin is pulled taut over the length of the loading compartment and is would around the iron section of the upright and around the edge of contact between the door iron section and the upright iron section.

When pulled taut in this way the tarpaulin protects all the striking parts, prevents the infiltration of water and dust and the infiltration of draughts.

The enclosed tables present a practical implementation of the invention, as an example without intent of limitation.

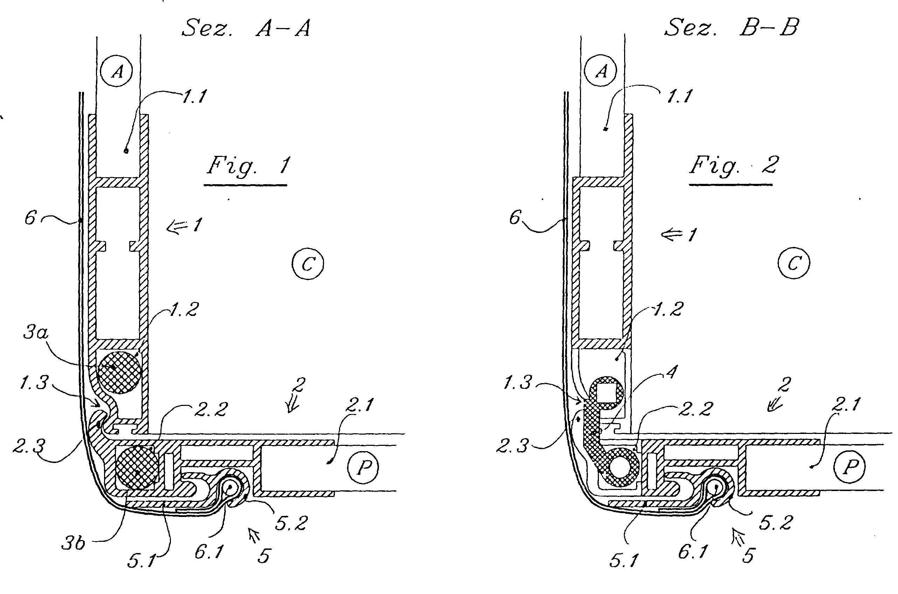

Figure 1 and figure 2 show the cross-section of the column or upright (1), the cross-section of the end of the door or side panel (2), the rod pins (3) and the pivots (4). In particular figures 1 and 2 represent two cross-sections with two different heights.

The column (1) has a generically rectangular cross-section, with a groove (1.1) on one shorter side for housing the matchboard, walls or slats (A), with a seat (1.2) on the opposite side to house and allow movement of the rod pin (3a) and with a G-shaped groove (1.3) on the side facing laterally towards the outside of the loading compartment (C).

The iron section of the end of the door (2) has a generically rectangular cross-section, with a groove (2.1) on one shorter side for housing the panels and/or slats that make up the door or the side panel (P), with a seat (2.2) on the opposite side to house and allow movement of the rod pin (3) and with a J-shaped ridge (2.3) on the short side opposite the one that receives the panels and facing the G-shaped part of the column. It also has an L-shaped groove (2.4) on the side corresponding to the exposed face of the door (P) when closed.

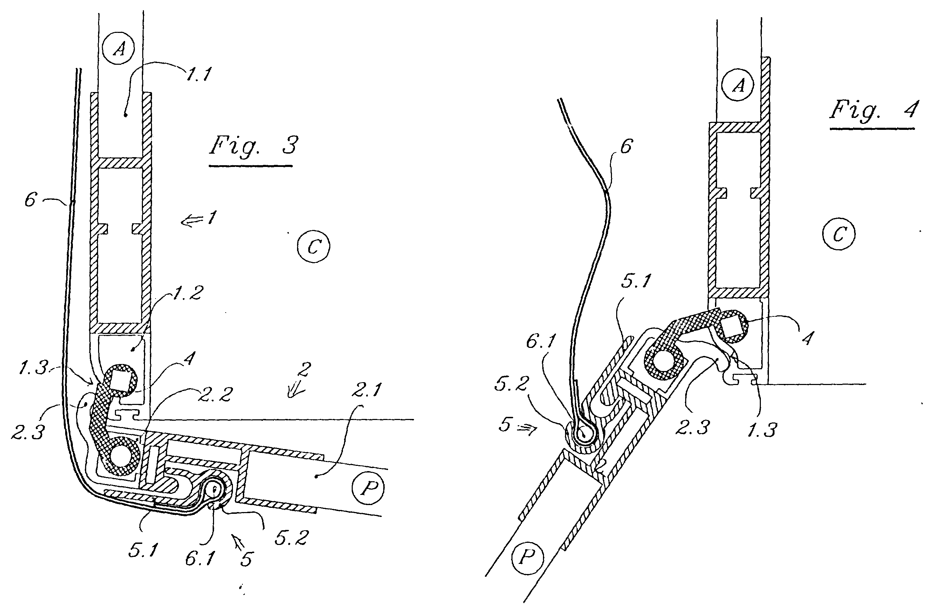

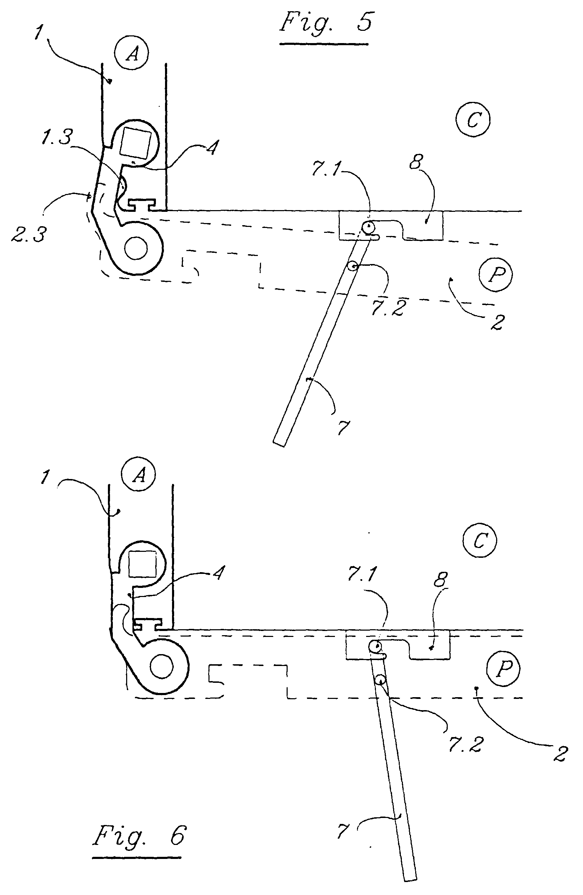

Figures 3 and 4 represent two moments in the opening phases of the door (P).

In particular, in figure 3 the leaf of the door (P) is turned and/or moved so that the J-shaped ridge (2.3) on the door iron section is released from the G-shaped groove (1.3) in the upright (1). In figure 4, the stage after figure 3, the leaf turns around the rod pins (3a-3b).

In these figures 1, 2, 3, 4 it is possible to see the iron section of the edge (5) of the tarpaulin (6) composed of a U-shaped part (5.1) joined to an arched part (5.2). This iron section of the edge (5) of the tarpaulin (6) contains in its arched part (5.2) the ribbed edge (6.1) of the tarpaulin (6) and is inserted in the L-shaped groove (2.4) in the end of the door (2).

In the various figures it is possible to see how the tarpaulin (6) covers the entire coupling and the edges of the upright (1) and of the door (2), with the door closed (figure 1), and how it is slackened when the door is opened (figures 3, 4).

Figures 5 and 6 show the closing lever with spike (or auxiliary lever) (7) hinged (7.2) under the edge of the door (2); the end (7.1) of this lever may be engaged in a coupling (8) on the bottom edge of the loading opening.

The two figures represent the effect of operating this lever (7) so as to facilitate the turning and closing movement of the door and to insert the J-shaped ridge (2.3) on the end of the door or side panel (2) in the G-shaped groove (1.3) in the upright or column (1).

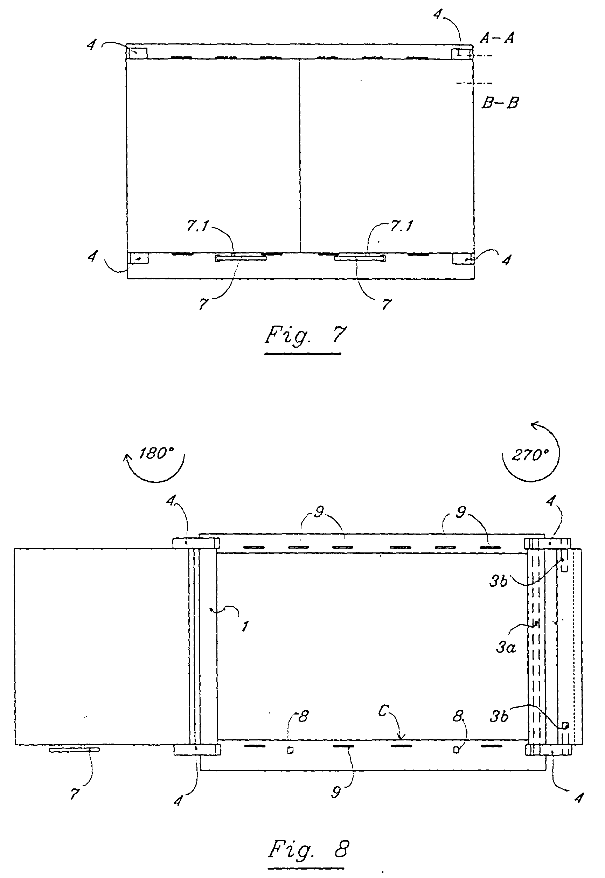

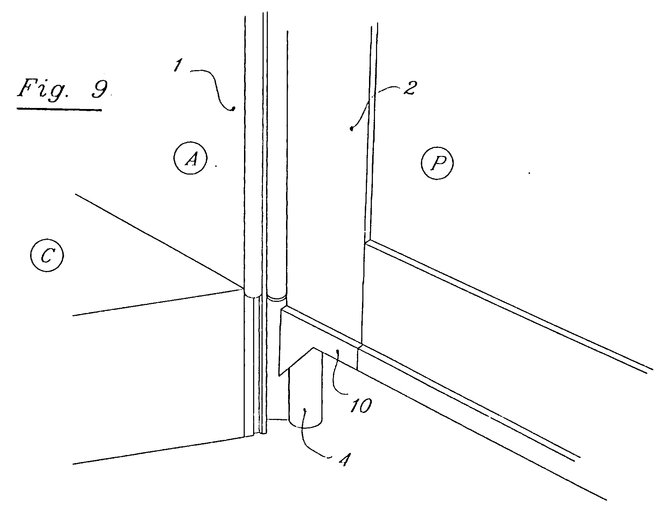

Figure 7 shows a view from behind the door (with two leaves) in which the top and bottom pivots (4) and the levers (7) can be seen: figure 8 shows the same view with the leaves open, where (8) indicates the bottom (and top) alignment supports above (and below) which the closed door fits.

Table 9 shows the intermediate phase of the final closing in which the catch (1) comes in contact with the central part inside the pivot (4), preventing the turning of the door (P) with respect to the pivot (4). In this way the J-shaped edge (2.3) of the door (P) turns towards the inside of the G-shaped groove (1.3) of the column/upright, guaranteeing perfect closing.

The above are the basic outlines of the invention, on the basis of which the technician will be able to put it into effect; any change which may be necessary upon implementation is to be regarded as completely protected by the present invention, provided that it is based on the same innovative concept described herein.

Therefore, with reference to the above description and to the attached drawing, the following claims are put forth.

## Claims

1. Opening and closing system for doors without hinges, characterized in that the door, when closed, connects on its whole height with the end onto the adjacent column or upright with which it has a complementary contact surface, and wherein the turning and movement of the door are guaranteed by two pivots aligned and integral with each other, outside the door, and anchored to the column or upright on which their suitable turning is also guaranteed, on account of which the door may be opened, thus being released from the adjacent column or upright.

2. Opening and closing system for doors according to claim 1), characterized in that the fixed structure that supports the door is the loading compartment of a container, mobile body and/or goods transport vehicle and wherein this structure has a doorway with uprights or columns as described in claim 1.

3. Opening and closing system for doors of the loading compartments of containers, mobile bodies and/or transport vehicles or elements, characterized in that it is composed of two iron sections of which one specifically for the door and one specifically for the upright or column, and wherein the iron section of the upright has a generically rectangular cross-section with a seat on the side in contact with the door, for housing polygonal and/or rod pins, and with a G-shaped groove facing the outside of the loading compartment, and wherein the iron section of the door has a generically rectangular cross-section with a groove on one short side for housing the panels of which the door is composed, with a seat on the opposite side for the housing and movement of the pins with a J-shaped ridge on the short side opposite the one that receives the panels and facing towards the iron section of the upright of the loading compartment and wherein said iron sections are reciprocally mated when the door is closed.

4. Opening and closing system for doors of the loading compartments of large-volume vehicles according to claims 1,2,3, characterized in that the iron sections of the upright are milled or at least partly interrupted in some points exposing the cylindrical and/or polygonal rod pins, and wherein 8-shaped pivots connect the anti-twisting shaft defined as the cylindrical/polygonal rod pin of the upright with the cylindrical pins on which the door turns.

5. Opening and closing system for doors of the loading compartments of vehicles according to claims 1, 2, 3, 4, characterized in that, when the door is closed, the forces exerted on the door are absorbed by the continuous ridge on the edge of the door and by the G-shaped groove in the upright, reciprocally mated, both on the closures and on the alignment supports.

6. Opening and closing system for doors of the loading compartments of vehicles according to claims 1, 2, 3, 4, 5, characterized in that, when the door is closed, the forces exerted on the door are absorbed by the bottom and/or top alignment supports.

7. Opening and closing system for doors of the loading compartments of vehicles according to claims 1, 2, 3, 4, 5, 6, characterized in that, on the door, at the level of the pivots, a catch is fitted, integral with the door, which acts on the central cross-section of the pivot during the intermediate closing phase with turning of the door, preventing the turning of the door with respect to the pivot from the intermediate to the final phase.

8. Opening and closing system for doors of the loading compartments of vehicles according to claims 1, 2, 3, 4, 5, 6, characterized in that the opening of the door involves a first movement of the door itself towards the outside of the loading compartment so as to release the J-shaped ridge of the door iron section from the G-shaped groove of the upright iron section and a subsequent joint turning of the door and of the pivots around the cylindrical/polygonal rod pins, and wherein the closing of the door is achieved by performing these operations in inverse order.

9. Opening and closing system for doors of the loading compartments of vehicles according to claims 1, 2, 3, 4, 5, 6, 8 characterized in that an auxiliary lever is hinged onto the bottom edge of the door and there is a coupling or groove in the bottom edge of the loading bed, in which one end of the auxiliary lever is engaged in the coupling or groove in the bottom edge of the loading bed, so that the turning of this lever facilitates the lateral movement of the door and the mating of the J-shaped ridge on the door iron section with the G-shaped groove in the upright.

10. Opening and closing system for doors of the loading compartments of vehicles according to claims 1, 2, 3, 4, 5, 6, 7, 8, 9 characterized in that the door iron section has an L-shaped groove on the side corresponding to the exposed face of the door when closed and near the edge with the J-shaped ridge.

11. Opening and closing system for doors of the loading compartments of vehicles according to claims 1, 2, 3, 4, 5, 6, 7, 8, 9, 10, characterized in that an iron section with a cross-section composed of a U shape with wings of different lengths joined to an arched part receives the ridged edge of the tarpaulin cover in the arched part, and wherein this iron section is inserted in the L-shaped groove of the door iron section.
